# EUROPÄISCHE PATENTSCHRIFT

(11) **EP 0 582 238 B1**
(45) Veröffentlichungstag und Bekanntmachung des Hinweises auf die Patenterteilung: **18.10.1995**
(21) Anmeldenummer: 93112316.0
(22) Anmeldetag: 31.07.1993
(51) Int. Cl.: A47J 39/00, A47J 27/16, F24C 15/32

(54) **Gerät für die Wärmebehandlung von Nahrungsmitteln**
Device for the heat treatment of food products
Dispositif pour le traitement à chaud de produits alimentaires

(30) Priorität: 04.08.1992 DE 4225696
(43) Veröffentlichungstag der Anmeldung: 09.02.1994
(73) Patentinhaber: Wiesheu-Wiwa GmbH, D-71563 Affalterbach (DE)
(72) Erfinder: Braun, Martin, D-73760 Ostfildern (DE); Heerig, Hans, D-71409 Schwaikheim (DE)
(74) Vertreter: Kastner, Hermann, Dipl.-Ing. Patentanwalt

(56) Entgegenhaltungen:
- EP-A- 0 171 522
- EP-A- 0 203 407
- EP-A- 0 386 862
- DE-U- 8 131 827
- US-A- 3 248 221

## Beschreibung

Für die Wärmebehandlung von Nahrungsmitteln, z.B. für das Auftauen tiefgefrorener Nahrungsmittel oder für das Kochen, Backen oder Braten von Lebensmitteln oder von Speisen, mittels Heißluft, mittels Dampf oder mittels eines Dampf-Luft-Gemisches werden besonders in Gastronomiebetrieben und dergleichen Geräte verwendet, die ein Gehäuse mit einer Tür aufweisen, dessen Innenraum durch eine Trennwand in einen Installationsraum und in einen Behandlungsraum unterteilt ist. Im Installationsraum ist ein Dampferzeuger angeordnet, der an eine Wasserzuführleitung angeschlossen ist und dessen Dampfauslaßöffnung über eine Verbindungsleitung mit dem Behandlungsraum in Verbindung steht. Der Dampferzeuger wird durch eine steuerbare Wärmequelle beheizt. In dem Behandlungsraum ist ein Gebläse angeordnet, mittels dessen das im Behandlungsraum vorhandene Fluid aus Luft und/oder Dampf umgewälzt werden kann. Im Behandlungsraum ist außerdem eine Heizung angeordnet, mit der das dort vorhandene Fluid erwärmt werden kann. Am Boden des Behandlungsraumes ist eine Auslaßöffnung vorhanden, an die eine Abflußleitung angeschlossen ist, durch die die tropfbaren Fluide, wie z.B. Kondensatzwasser, aus den Nahrungsmitteln austretende und abtropfende Säfte und/oder flüssige Fette und Öle, abgeleitet werden können. Im oberen Bereich des Behandlungsraumes ist eine zweite Auslaßöffnung vorhanden an die ebenfalls eine Abflußleitung angeschlossen ist durch die die nichttropfbaren Fluide des Behandlungsraumes, wie z.B. Dampf, Wrasen oder Luft, nach außen abgeleitet werden können.

Die bekannten Geräte dieser Art (z.B. EP-A-0 171 522) arbeiten bei reinem Heißluftbetrieb zufriedenstellend. Das Auftauen und Erwärmen tiefgefrorener Nahrungsmittel oder das Kochen oder Dämpfen von Nahrungsmitteln wird im allgemeinen mit reinem Dampf durchgeführt, weil man dabei die Kondensationswärme des Dampfes ausnutzen kann um die Nahrungsmittel rasch zu erwärmen und zu garen. Beim Kondensieren des Naßdampfes auf den zumindest anfänglich kälteren Nahrungsmitteln ist der Wärmeübergang auf die Nahrungsmittel wesentlich intensiver als bei Heißluft. Zu diesem Zweck wird die zu Beginn im Behandlungsraum noch vorhandene Luft durch intensive Dampfzufuhr durch die im oberen Bereich des Behandlungsraumes angeordnete Auslaßöffnung hindurch aus dem Behandlungsraum verdrängt, so daß die weitere Wärmebehandlung in mehr oder minder reiner Dampfatmosphäre bei Siedetemperatur oder, genauer gesagt, bei Kondensiertemperatur erfolgt. Das Garen von Nahrungsmitteln bei höherer Temperatur ist mit Sattdampf nicht möglich. Das kann nur im Heißluftbetrieb oder im Mischbetrieb, d.h. mit einem Gemisch aus Heißluft und Heißdampf, erfolgen. Dazu wird die Luft im Behandlungsraum und etwa vorhandener Dampf durch die Heizung im Behandlungsraum auf die gewünschte Gartemperatur gebracht und mittels des Gebläses im Behandlungsraum umgewälzt. Ein bestimmter Dampfgehalt im Fluid des Behandlungsraums ist bei manchen Garvorgängen und bei manchen Nahrungsmitteln deshalb erforderlich, damit bei der höheren Gartemperatur in den Nahrungsmitteln deren Feuchtigkeitsgehalt nicht allmählich verdampft und sie dadurch zumindest oberflächlich austrocknen wobei unter Umständen durch Ausbleichen auch ihr Aussehen leidet. Das wird im Mischbetrieb dadurch vermieden, daß der Dampfgehalt im Behandlungsraum zumindest nahe dem Sättigungszustand des Fluids aus Heißluft und Heißdampf gehalten wird. Dann wird der Flüssigkeitsaustritt aus den Nahrungsmitteln in das Fluid des Behandlungsraumes weitestgehend vermieden.

Bei den bekannten Geräten treten beim Dampfbetrieb und beim Mischbetrieb mit einem Dampf-Luft-Gemisch einige Nachteile auf.

Für die Steuerung der Heizung des Dampferzeugers ist in einem sogenannten Meßfühlerrohr, das den Behandlungsraum mit der Umgebung des Gerätes verbindet, ein Temperaturfühler angeordnet. Dieser Temperaturfühler mißt in der Anfangsphase die Temperatur der Luft, die vom einströmenden Dampf aus dem Behandlungsraum verdrängt wird. In dem Maße, in dem im Behandlungsraum der Luftanteil abnimmt und der Dampfanteil zunimmt, steigt infolge der unvermeidlichen Vermischungsvorgänge die Temperatur des verdrängten Fluids an und nähert sich allmählich der Dampftemperatur. Wenn beim Erreichen eines bestimmten eingestellten Temperaturwertes vom Temperaturfühler aus die Heizung des Dampferzeugers unterbrochen oder zumindest verringert wird, geht wegen der thermischen Trägheit aller Teile die Dampferzeugung noch etwas weiter. Der Dampfüberschuß entweicht durch das Meßfühlerrohr und durch andere Auslaßöffnungen ins Freie. Durch die anfänglich kühleren Nahrungsmitteln im Behandlungsraum wird ein Teil des Dampfes kondensiert, wodurch sich das Volumen des im Behandlungsraum vorhandenen Fluids verringert. Der dadurch entstehende Unterdruck im Behandlungsraum sorgt dafür, daß Umgebungsluft in das Meßfühlerrohr eindringt. In Abhängigkeit von dem Hohlraumvolumens des Meßfühlerrohres, von der Größe seiner inneren Oberfläche, von seiner Wärmekapazität und von der Lage des Temperaturfühlers im Meßfühlerrohr erwärmt sich die einströmende Frischluft mehr oder minder stark. Der Temperaturfühler mißt demnach den durch die einströmende Frischluft verursachten Temperaturabfall mit einer gewissen Zeitverzögerung. Hinzu kommt, daß für das Umschalten der Heizung des Dampferzeugers ein bestimmter Temperaturunterschied zwischen den beiden Schaltpunkten unvermeidlich ist, wodurch eine weitere Verzögerung bis zum Umschalten der Heizung eintritt. Wegen der schon erwähnten thermischen Trägheit aller Teile des Dampferzeugers einschließlich seiner Wasserfüllung vergeht eine weitere Zeitspanne, bis wieder Dampf entsteht und in den Behandlungsraum überströmen kann. Dort muß der Dampf zuerst wieder die eingedrungene Frischluft verdrängen und alle durch die Frischluft inzwischen etwas abgekühlten Teile einschließlich der Nahrungsmittel wieder aufheizen. Wenn das Fluid im Meßfühlerrohr in der Umgebung des Temperaturfühlers die dem oberen Schaltpunkt entsprechende Temperatur wieder erreicht hat, ist die Dampferzeugung voll im Gange. Wegen der thermischen Trägheit wird wieder Überschußdampf erzeugt, der nutzlos entweicht.

Die bekannten Geräte haben demnach eine große Hysterese hinsichtlich der Dampferzeugung und auch hinsichtlich des Temperaturverlaufes im Behandlungsraum. Die Auswirkungen der Temperaturschwankungen und die Schwankungen der Verdampfzufuhr auf den Garvorgang der im Behandlungsraum vorhandenen Nahrungsmittel läßt sich nicht genau angeben, zumal sie sehr stark von der Art, insbesondere von der Masse und dem Wassergehalt und damit von der Wärmekapazität der Nahrungsmittel abhängen. Das intermitierende Auftreten von Überschußdampf in merklichen Mengen wirkt sich stark auf den Energieverbrauch der Geräte, d.h. auf deren Wirtschaftlichkeit, aus. Die austretenden Dampfmengen belasten die Umgebung der Geräte und stellen unter Umständen auch eine gewisse Gefahrenquelle dar.

Die vorgeschlagenen gerätetechnischen Abwandlungen beseitigen diese Nachteile nicht sondern vermindern sie allenfalls und verändern sie.

Durch einen im Meßfühlerrohr angeordneten Druckfühler soll der Druckanstieg erfaßt werden, der dann eintritt, wenn im Behandlungsraum an den Nahrungsmittels kein Dampf mehr kondensiert und daher vom Dampferzeuger her mehr Dampf in den Behandlungsraum einströmt als dort unmittelbar 'verbraucht' wird. Dieser Druckanstieg ist bei einem offenen System verhältnismäßig gering, so daß es Schwierigkeiten bereitet, den Druckanstieg überhaupt zu erfassen. Abgesehen davon sagt der Druckanstieg im Behandlungsraum nichts über die Überschußmenge des Dampfes aus. Da auch hier für einen einwandfreien Betrieb der obere Umschaltwert des Druckes einen gewissen Abstand vom Betriebswert haben muß, ist auch bei diesem Meßverfahren eine merkliche Hysterese unvermeidlich, die in beiden Schaltrichtungen durch die thermische Trägheit der betreffenden Teile des Gerätes verstärkt wird.

Die Maßnahme, den Meßfühler in einer verhältnismäßig engen Bypass-Leitung zur Abflußleitung für das Kondensat anzuordnen, verändert die Verhältnisse nur. Der Mengenstrom des Fluids in der Bypass-Leitung im Verhältnis zu dem Mengenstrom in der Abflußleitung ist umgekehrt proportional den Strömungswiderständen in beiden Leitungen. Zu diesen Leitungen muß auch der im Behandlungsraum vor den Auslaßöffnungen gelegene Raumteil als Einzugsbereich der Abflußleitungen hinzugerechnet werden. Dort hängt der Strömungswiderstand sehr stark von den Strömungswiderständen ab, die der Überschußdampf auf seinem Weg von der Eintrittsöffnung in den Behandlungsraum, durch diesen hindurch und durch die Auslaßöffnungen und die daran anschließenden Abflußleitungen hindurch bis ins Freie überwinden muß. Diese Strömungswiderstände sind aber nicht konstant. Im Behandlungsraum hängen sie stark von der Art und von der Menge der dort vorhandenen Nahrungsmittel und nicht zuletzt davon ab, wie eng beieinander die Nahrungsmittel, vor allem in der Nähe der Auslaßöffnungen, angeordnet sind. Die Strömungswiderstände hängen auch davon ab, ob und gegebenenfalls wie stark die im Bodenbereich vorhandene Auslaßöffnung und die daran anschließende Abflußleitung durch Nahrungsmittelteile und/oder durch feste Ablagerungen verengt sind. Aufgrund dieser Umstände geben die in der Bypass-Leitung erfaßten Meßwerte, gleich welcher Art sie sind, die Verhältnisse im Behandlungsraum nur unzulänglich wider.

Diese Aufgabe wird durch ein Gerät mit den im Anspruch 1 angegebenen Merkmalen gelöst. Dadurch, daß in der Verbindungsleitung vom Dampferzeuger zum Behandlungsraum der Meßwertaufnehmer eines Strömungsmessers angeordnet ist, kann die Strömungsgeschwindigkeit des Dampfes in diesem Verbindungsrohr gemessen werden. Jede Änderung des Druckes im Behandlungsraum verändert auch den Druckunterschied zwischen dem Behandlungsraum und dem Dampferzeuger und wirkt sich in einer entsprechenden Veränderung der Strömungsgeschwindigkeit im Verbindungsrohr aus. Schon dann, wenn das vom Dampferzeuger geschaffene Druckgefälle zum Behandlungsraum hin sich verringert, nimmt die Strömungsgeschwindigkeit im Verbindungsrohr ab. Es muß also gar nicht erst ein Druckausgleich oder gar ein Anstieg des Druckes über den Anfangsdruck abgewartet werden, um Steuerungsvorgänge auszulösen, insbesondere um die Energiezufuhr zum Dampferzeuger zu drosseln oder ganz abzuschalten. Wenn nach der erstmaligen Verringerung der Strömungsgeschwindigkeit bei einem bestimmten Meßwert ein Steuersignal zum Drosseln der Heizung des Dampferzeugers ausgelöst wurde und dadurch die Dampferzeugung sich verringerte, tritt alsbald eine weitere Verringerung der Strömungsgeschwindigkeit im Verbindungsrohr ein. Beim Erreichen eines bestimmten Meßwertes unterhalb des ersten kann wieder ein Steuersignal ausgelöst werden, aufgrund dessen die Heizung des Dampferzeugers wieder verstärkt oder wieder eingeschaltet wird, so daß die Dampferzeugung und damit auch die Strömungsgeschwindigkeit im Verbindungsrohr wieder zunimmt. Wenn danach mit zunehmender Verringerung des Druckgefälles zwischen dem Dampferzeuger und dem Behandlungsraum die Strömungsgeschwindigkeit im Verbindungsrohr wieder abnimmt, wird wieder das zuvor genannte erste Steuersignal ausgelöst, das zu einer Verringerung der Dampferzeugung führt.

Durch diese Arbeitsweise der Steuerung des Dampferzeugers ist zwar ebenfalls eine gewisse Hysterese bei der Dampferzeugung gegeben. Diese führt jedoch nicht zu der Erzeugung von Überschußdampf, weil der Regler schon vorher eingreift.

Bei einer Ausgestaltung des Gerätes nach Anspruch 2 wird ein Meßwertaufnehmer ohne mechanisch bewegte Teile eingesetzt, der außerdem sehr unempfindlich ist. Dadurch, daß der Durchlaßquerschnitt im Längenabschnitt des Druckaufnehmers für den dynamischen Druck auf den Durchlaßquerschnitt des freien Verbindungsrohres so abgestimmt werden kann, daß schon ein verhältnismäßig geringer Dampfmengenstrom eine verhältnismäßig große Erhöhung der Strömungsgeschwindigkeit in dem Ringquerschnitt ergibt, lassen sich auch geringe Änderungen der Strömungsgeschwindigkeit zuverlässig erfassen und so eine sehr feinfühlige Regelung des Dampferzeugers erzielen. Ähnliches gilt auch für eine Ausgestaltung nach Anspruch 3.

Eine Ausgestaltung nach Anspruch 4 ergibt einen Signalwandler, der recht unempfindlich ist und der bei der Verwendung eines Schrägrohrmanometers einen sehr feinfühligen Meßwertabgriff ergibt.

Mit einer Ausgestaltung nach Anspruch 5 wird ein gerätetechnisch verhältnismäßig einfacher und robuster Signalwandler geschaffen.

Durch eine Ausgestaltung nach Anspruch 6 und/oder Anspruch 7 werden die Steuerungsmöglichkeiten erweitert, weil durch die Veränderung des Fluidauslasses die Druckverhältnisse, insbesondere im Behandlungsraum, stärker beeinflußt werden können als das durch die natürlichen Vorgänge von selbst eintritt.

Durch eine Ausgestaltung nach Anspruch 8 ist die Wärmebehandlung auch von solchen Nahrungsmitteln möglich, bei denen Säfte und vor allem Öle und/oder flüssige Fette austreten, ohne daß durch diese Stoffabsonderungen die für die Steuerung des Gerätes wichtigen Teile ungünstig beeinflußt werden können. Durch eine Weiterbildung nach Anspruch 9 wird es möglich, die wässerigen Anteile der Stoffabsonderungen der behandelten Nahrungsmittel in den Kondensatablauf einzuleiten und zusammen mit dem Kondensat abzuführen, während die Öl- und Fettanteile im Auffangbehälter verbleiben und daraus von Zeit zu Zeit entfernt werden, wenn der Auffangbehälter zu diesem Zweck aus dem Gerät herausgenommen wird.

Durch eine Ausgestaltung nach Anspruch 10 wird das im Behandlungsraum vorhandene Fluid in einer strömungstechnisch besonders günstigen Weise umgewälzt. Dadurch werden alle Raumbereiche des Behandlungsraumes vom Fuid gleichermaßen erreicht und strömungstechnische Toträume vermieden. Das trägt auch dazu bei, die Nahrungsmittel an allen Stellen des Behandlungsraumes gleichmäßig zu behandeln. Außerdem verringert sich durch diese Maßnahme der Energieaufwand für das Umwälzen des Fluids im Behandlungsraum. Eine Weiterbildung nach Anspruch 11 sorgt für eine gleichmäßige Erwärmung des umgewälzten Fluids.

Im folgenden wird die Erfindung anhand eines in der Zeichnung dargestellten Ausführungsbeispieles näher erläutert. Es zeigen:
- Fig. 1: einen Längsschnitt des Gerätes mit stark schematisierter Darstellung der Einzelteile;
- Fig. 2: eine Ausschnittvergrößerung der Einzelheit "A" in Fig. 1;
- Fig. 3: eine Seitenansicht eines anderen Signalwandlers in Bezug auf die Einzelheit "A".

Das Gerät 10 für die Wärmebehandlung von Nahrungsmitteln weist ein Gehäuse 11 auf. Im Inneren des Gehäuses 11 werden durch mehrere Trennwände 12 ... 14 ein Behandlungsraum 16 für die Wärmebehandlung der Nahrungsmittel und ein Installationsraum 17 gasdicht voneinander getrennt. Im Bereich des Behandlungsraumes 16 weist das Gehäuse 11 eine nicht dargestellte Tür auf, durch die die Nahrungsmittel in den Behandlungsraum 16 eingebracht und daraus wieder entnommen werden können.

Die lotrecht ausgerichteten drei Trennwände 12 ... 14 und die der Trennwand 14 gegenüberliegende, aber nicht dargestellte vierte lotrechte Trennwand, bilden die Umfangswände des Behandlungsraumes. Die Decke des Gehäuses 11 bildet zugleich die Decke des Behandlungsraumes 16. Die untengelegene Trennwand dient als Boden 15 des Behandlungsraumes 16 und ist daher trichterförmig ausgebildet mit sehr flachen Neigungswinkeln ihrer einzelnen Flächenabschnitte gegenüber der Waagerechten. An der tiefsten Stelle des Bodens 15 ist eine erste Auslaßöffnung 18 des Behandlungsraumes 16 angeordnet. Daran schließt eine Abflußleitung 19 an. Sie weist einen lotrecht ausgerichteten ersten Längenabschnitt 21, einen Krümmerteil 22 und einen waagerecht verlaufenden Längenabschnitt 23 auf. Im oberen Bereich des Behandlungsraumes 16 ist eine zweite Auslaßöffnung 24 vorhanden, an die eine Abflußleitung 25 anschließt.

Der Behandlungsraum 16 ist durch eine lotrecht ausgerichtete Leitwand 26 in einen Hauptraum 27 und in einen Vorraum 28 unterteilt. Im Hauptraum sind nicht dargestellte Tragelemente, insbesondere in Form von Einschubleisten, angeordnet, auf denen platten- oder gitterförmige Träger für die zu behandelnden Nahrungsmittel abgelegt werden können. Im Vorraum 28 ist das Laufrad 29 eines Umwälzgebläses 31 angeordnet. Die Drehachse des Gebläses 31 ist waagerecht ausgerichtet und erstreckt sich durch die Trennwnd 12 hindurch. Im Vorraum 17 ist der Antriebsmotor 32 für das Gebläse angeordnet.

Die Leitwand 26 weist etwa in ihrer Mitte eine kreisrunde Durchlaßöffnung 33 auf, deren Randbereich als Einlaufdüse für das Gebläse 31 ausgebildet ist, die mit dessen Drehachse fluchtet. An ihren Rändern hält die Leitwand 26 einen gewissen Abstand von den sie umgebenden Trennwänden des Behandlungsraumes 16 ein, so daß ringsum Durchlaßöffnungen 34 vorhanden sind. Diese Durchlaßöffnungen 34 oder, genauer gesagt, diese Durchlaßbereiche 34 und die mittige Durchlaßöffnung 33 stellen eine Verbindung zwischen dem Hauptraum 27 und dem Vorraum 28 her. Beim Betrieb des Geläses 31 saugt es durch die Durchlaßöffnung 33 das im Hauptraum 27 vorhandene Fluid an und bläst es aus dem Vorraum 28 durch die Durchlaßbereiche 34 wieder in den Hauptraum 27 hinüber.

Das Gebläse 31 ist von einer wendelförmigen Heizung 35 umgeben, mittels der das vom Gebläse 31 umgewälzte Fluid erwärmt werden kann.

Im Installationsraum 17 ist ein Dampferzeuger 36 angeordnet. Dieser weist eine Heizung 37 auf, die durch einen Heizwendel symbolisiert ist. Der Dampferzeuger 36 ist in seinem unteren Bereich an eine Wasserzuführleitung 38 angeschlossen. In seinem oberen Bereich weist er eine Dampfauslaßöffnung 39 auf, an die eine Verbindungsleitung 41 vom Dampferzeuger 36 zum Behandlungsraum 16 angeschlossen ist.

Der Längenabschnitt 23 der Abflußleitung 19 mündet in ein Abzugrohr 42, das im Installationsraum 17 lotrecht angeordnet ist. An seinem oberen Ende mündet das Abzugrohr ins Freie, so daß gasförmige Fluide, die aus der Abflußleitung 19 zum Abzugrohr 42 gelangen, nach oben ins Freie abziehen können. Am unteren Ende mündet das Abzugrohr 42 in einen Trichter 43 einer Kondensat-Abflußleitung 44.

Im Bereich der Mündung der Abflußleitung 19 in das Abzugsrohr 42 ist ein Drosselorgan 45 angeordnet, das längs der Fluchtlinie des Längenabschnittes 43 der Abflußleitung 19 längsverschieblich geführt ist. Das Drosselorgan 45 ist mit einem reversierbaren Längsantrieb 46 gekoppelt. Mittels des Längsatriebes 46 kann das Drosselorgan 45 relativ zu dem Mündungstrichter 47 der Abflußleitung 19 verstellt werden, und zwar von einer Stellung mit voller Öffnung bis zu einer Stellung mit völliger Absperrung der Abflußleitung 19, womit dann das Drosselorgan 45 zugleich als Absperrorgan wirkt.

In der im oberen Bereich des Behandlungsraumes 16 angeordneten Abflußleitung 25 ist eine Drosselklappe 48 angeordnet, die ebenfalls als Drossel- und Absperrorgan dient. Ihr Antrieb ist nicht dargestellt.

Die Drosselklappe 48 kann von Hand betätigt werden. Für eine umfassende Regelung und Steuerung des Gerätes ist es aber zweckmäßig, die Drosselklappe mit einem Kraftantrieb zu koppeln, der von einer nicht dargestellten Steuervorrichtung gesteuert wird. Der Längsantrieb 46 des Drosselorgans 45 ist als Kraftantrieb auf jeden Fall mit der Steuervorrichtung des Gerätes verbunden.

Die Abflußleitung 19 weist an der tiefsten Stelle ihres Krümmerteils 22 eine Auslaßöffnung 49 auf. Unterhalb dieser Auslaßöffnung 49 ist ein Auffangbehälter 51 angeordnet, dessen Einlaßöffnung sich zumindest annähernd gasdicht an die Auslaßöffnung 49 ankoppelt, wenn der Auffangbehälter 51 in seine Betriebsstellung gebracht wird. Der Auffangbehälter 51 ist als Öl- und Fettabscheider ausgebildet. Er weist eine Abflußleitung für die wässrigen Bestandteile des Behälterinhaltes auf. Diese Abflußleitung 53 ist so ausgebildet, daß sie mit einem Einlauftrichter 54 der Kondensat-Abflußleitung 44 gekoppelt wird, wenn der Auffangbehälter 51 in seine Betriebsstellung gebracht wird.

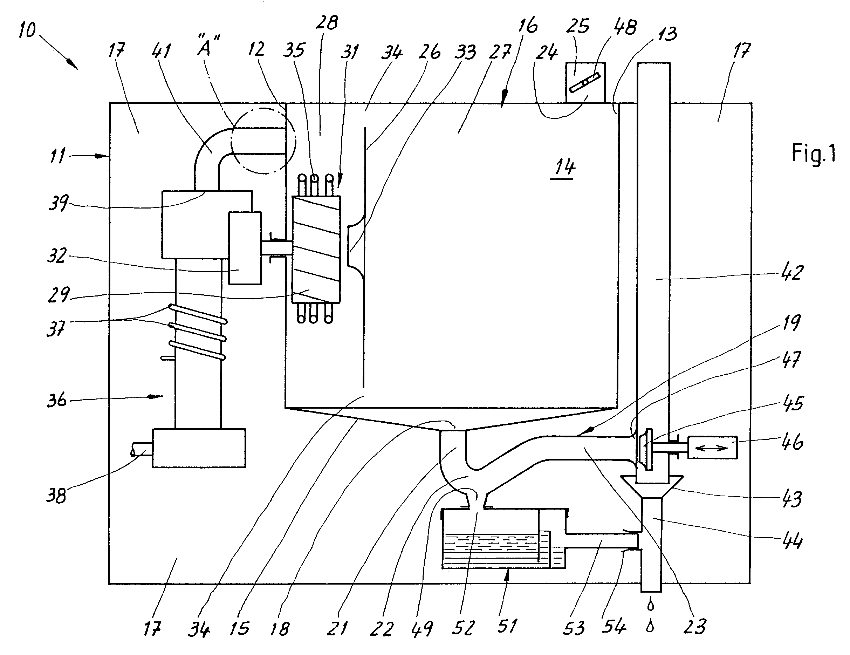

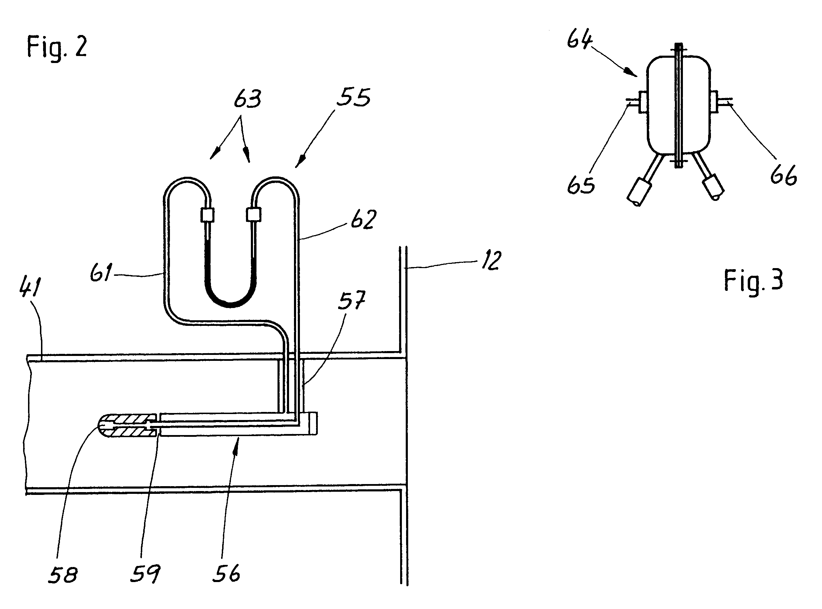

In Fig. 1 ist im Bereich der Verbindungsleitung 41 vom Dampferzeuger 35 zum Behandlungsraum 16 mit einem strichpunktierten Kreis "A" ein Strömungsmesser 55 angedeutet, der im folgenden anhand Fig. 2 näher erläutert wird.

Der Strömungsmesser 55 weist als Meßwertaufnehmer ein Staurohr 56 auf, das auch als Prandtl-Rohr bezeichnet wird. Das Staurohr 56 ist mittels eines Halters 57 an der Wand der Verbindungsleitung 41 befestigt. Seine Meßöfnnungen 58 und 59 sind über je eine Verbindungsleitung, die durch den Halter 57 hinduchgeführt sind, mit je einem der Schenkel eines U-Rohr-Manometers 63 verbunden. Die optoelektronische Abtastvorrichtung für den Stand der Flüssigkeitssäulen im Manometer 63 ist nicht dargestellt.

Anstelle des U-Rohr-Manometers 63 kann auch ein anderer Differenzdruckmesser verwendet werden, beispielsweise eine Membran-Druckmeßdose, die für eine Differenzdruckmessung eingerichtet ist. Die vom anstehenden Differenzsdruck bewirkte Stellung ihrer Membran wird mittels elektrischer Abtaster 65 und 66 erfaßt, deren Ausgangssignale für die Steuerung einiger der Funktionen des Gerätes dienen.

### Bezugszeichenliste

- 10: Gerät
- 11: Gehäuse
- 12: Trennwand
- 13: Trennwand
- 14: Trennwand
- 15: Boden
- 16: Behandlungsraum
- 17: Installationsraum
- 18: Auslaßöffnung
- 19: Abflußleitung
- 21: Längenabschnitt
- 22: Krümmerteil
- 23: Längenabschnitt
- 24: Auslaßöffnung
- 25: Abflußleitung
- 26: Leitwand
- 27: Hauptraum
- 28: Vorraum
- 29: Laufrad
- 31: Gebläse
- 32: Antriebsmotor
- 33: Durchlaßöffnung
- 34: Durchlaßöffnung
- 35: Heizung
- 36: Dampferzeuger
- 37: Heizung
- 38: Wasserzuführleitung
- 39: Dampfauslaßöffnung
- 41: Verbindungsleitung
- 42: Abzugrohr
- 43: Trichter
- 44: Kondensatz-Abflußleitung
- 45: Drosselorgan
- 46: Längsantrieb
- 47: Mündungstrichter
- 48: Drosselklappe
- 49: Auslaßöffnung
- 51: Auffangbehälter
- 52: Einlaßöffnung
- 53: Abflußleitung
- 54: Einlauftrichter
- 55: Strömungsmesser
- 56: Staurohr
- 57: Halter
- 58: Meßöffnung
- 59: Meßöffnung
- 61: Verbindungsleitung
- 62: Verbindungsleitung
- 63: Manometer
- 64: Meßdose
- 65: Abtaster
- 66: Abtaster

## Patentansprüche

1. Gerät für die Wärmebehandlung von Nahrungsmitteln, mit den Merkmalen:
- es ist ein Gehäuse (11) mit einer Tür vorhanden,
- in dem Gehäuse (11) sind durch wenigstens eine gasdichtete Trennwand (12) wenigstens zwei Räume (Behandlungsraum 16; Installationsraum 17) voneinander abgetrennt,
- in dem Installationsraum (17) ist ein Dampferzeuger (36) angeordnet,
- - der an eine Wasserzuführleitung (38) angeschlossen ist,
- - der durch eine steuerbare Wärmequelle (37) heizbar ist und
- - dessen Dampfauslaßöffnung (39) über eine Verbindungsleitung (41) mit dem Behandlungsraum (16), in Verbindung steht,
- in dem Behandlungsraum (16) ist ein Gebläse (31) angeordnet,
- - mittels dessen das im Behandlungsraum (16) vorhandene Fluid umwälzbar ist,
- in dem Behandlungsraum (16) ist eine Heizung (35) angeordnet,
- - mittels derer das im Behandlungsraum (16) vorhandene Fluid heizbar ist,
- am Boden (15) des Behandlungsraumes (16) ist eine erste Auslaßöffnung (18) vorhanden,
- - an die eine Abflußleitung (19) insbesondere für die tropfbaren Fluide des Behandlungsraumes (16) angeschlossen ist,
- im oberen Bereich des Behandlungsraumes (16) ist eine zweite Auslaßöffnung (24) vorhanden,
- - an die eine Abflußleitung (25) insbesondere für die nichttropfbaren Fluide des Behandlungsraumes (16) angeschlossen ist,
**gekennzeichnet** durch das Merkmal:
- in der Verbindungsleitung (41) zwischen dem Dampferzeuger (36) und dem Behandlungsraum (16) ist der Meßwertaufnehmer (56) eines Strömungsmessers (55) angeordnet, dessen Signalgeber (63) zumindest mit der Steuerung der Wärmequelle (37) des Dampferzeugers (36) in Verbindung steht.

2. Gerät nach Anspruch 1,
**gekennzeichnet** durch das Merkmal:
- der Meßwertaufnehmer des Strömungsmessers (55) ist als Staurohr (56) ausgebildet.

3. Gerät nach Anspruch 1,
**gekennzeichnet** durch das Merkmal:
- der Meßwertaufnehmer des Strömungsmessers (55) ist als Meßblende oder als Meßdüse oder als Meßventuridüse ausgebildet.

4. Gerät nach einem der Ansprüche 1 bis 3,
**gekennzeichnet** durch das Merkmal:
- der Signalgeber des Strömungsmessers (55) ist als Flüssigkeitsmanometer (63) für Differenzdruckmessung ausgebildet und mit Signalgebern für den Flüssigkeitsstand in den beiden Schenkeln des Flüssigkeitsmanometers ausgerüstet.

5. Gerät nach einem der Ansprüche 1 bis 3,
**gekennzeichnet** durch das Merkmal:
- der Signalgeber ist als Druckmeßdose (64) für Differenzdruckmessung ausgebildet.

6. Gerät nach einem der Ansprüche 1 bis 5,
**gekennzeichnet** durch die Merkmale:
- in der Abflußleitung (19) hinter der ersten Auslaßöffnung (18) des Behandlungsraumes ist ein Absperrorgan und/oder ein Drosselorgan (45) angeordnet,
- bevorzugt sind das Absperrorgan und/oder das Drosselorgan (45) durch den Signalgeber (63) des Strömungsmessers (55) beeinflußbar ausgebildet.

7. Gerät nach einem der Ansprüche 1 bis 6,
**gekennzeichnet** durch die Merkmale:
- in die Abflußleitung (25) hinter der zweiten Auslaßöffnung (24) ist ein Absperrorgan (48) und/oder ein Drosselorgan angeordnet,
- vorzugsweise sind das Absperrorgan (48) und/oder das Drosselorgan durch den Signalgeber (63) des Strömungsmessers (55) beeinflußbar ausgebildet.

8. Gerät nach einem der Ansprüche 1 bis 7,
**gekennzeichnet** durch die Merkmale:
- die Abflußleitung (19) hinter der ersten Auslaßöffnung (18) weist, vorzugsweise in der Nachbarschaft der ersten Auslaßöffnung (18), in ihren unten gelegenen Wandbereich einen Nebenauslaß (49) auf, unterhalb dessen ein Auffangbehälter (51) für tropfbare Fluide aus dem Behandlungsraum (16) angeordnet ist,
- bevorzugt ist der Auffangbehälter (51) herausnehmbar ausgebildet.

9. Gerät nach Anspruch 8,
**gekennzeichnet** durch die Merkmale:
- der Auffangbehälter (51) weist eine Auslaßöffnung (53) auf, die mit der Abflußleitung (44) hinter der ersten Auslaßöffnung (18; 19) des Behandlungsraumes (16) verbunden ist,
- bevorzugt ist der Auffangbehälter (51) und/oder seine Auslaßöffnung als Öl- und Fettabscheider ausgebildet.

10. Gerät nach einem der Ansprüche 1 bis 9,
**gekennzeichnet** durch die Merkmale:
- im Behandlungsraum (16) ist eine Leitwand (26) angeordnet,
- - die den Behandlungsraum (16) in einen Hauptraum (27) für die Wärmebehandlung der Nahrungsmittel und in einen Vorraum (28) für das Gebläse (31) und vorzugsweise auch für die Heizung (35) unterteilt,
- die Leitwand (26) weist zwei Öffnungsbereiche (33; 34) auf, durch die der Hauptraum (27) und der Vorraum (28) miteinander in Verbindung stehen,
- - von denen der eine Öffnungsbereich (33) vorzugsweise in der Mitte der Leitwand (26) gelegen ist und bevorzugt als Einlauftrichter oder Einlaufdüse ausgebildet ist und
- - von denen der andere Öffnungsbereich (34) zumindest streckenweise im Bereich des Außenrandes der Leitwand (26) gelegen ist,
- vorzugsweise ist die Einsaugöffnung des Gebläses (31) in der Fluchtlinie des Öffnungsbereiches (33) mit der Einlaufdüse angeordnet.

11. Gerät nach Anspruch 10,
**gekennzeichnet** durch das Merkmal:
- die Heizung (35) im Vorraum (28) ist im Bereich der Auslaßöffnungen des Gebläses (31) angeordnet.

## Claims

1. An apparatus for the heat-treatment of foodstuffs, having the features:
- a housing (11) with a door is present,
- in the housing (11), at least two chambers (treatment chamber 16; installation chamber 17) are separated from one another by means of at least one gas-tight dividing wall (12),
- in the installation chamber (17) there is arranged a steam generator (36),
- - which is connected to a water feed line (38),
- - which can be heated by means of a controllable heat source (37) and
- - whose steam outlet opening (39) is connected to the treatment chamber (16) via a connecting pipe (41),
- in the treatment chamber (16) there is arranged a fan (31),
- - by means of which the fluid present in the treatment chamber (16) can be circulated,
- in the treatment chamber (16) there is arranged a heating device (35),
- - by means of which the fluid present in the treatment chamber (16) can be heated,
- at the base (15) of the treatment chamber (16) there is a first outlet opening (18),
- - to which there is connected a discharge line (19) particularly for the treatment-chamber fluids which are capable of dripping,
- in the upper region of the treatment chamber (16) there is a second outlet opening (24),
- - to which there is connected a discharge line (25) particularly for the treatment-chamber fluids which are not capable of dripping,
characterised by the feature:
- in the connecting pipe (41) between the steam generator (36) and the treatment chamber (16) there is arranged the sensor (56) of a flow meter (55), whose signal transmitter (63) is at least connected to the control device of the heat source (37) of the steam generator (36).

2. An apparatus in accordance with Claim 1, characterised by the feature:
- the sensor of the flow meter (55) is in the form of a Pitot tube (56).

3. An apparatus in accordance with Claim 1, characterised by the feature:
- the sensor of the flow meter (55) is in the form of an orifice gauge or a calibrated nozzle or a calibrated Venturi nozzle.

4. An apparatus in accordance with any one of Claims 1 to 3, characterised by the feature:
- the signal transmitter of the flow meter (55) is in the form of a fluid manometer (63) for differential pressure measurement and is equipped with signal transmitters for the fluid level in the two arms of the fluid manometer.

5. An apparatus in accordance with any one of Claims 1 to 3, characterised by the feature:
- the signal transmitter is in the form of a pressure cell (64) for differential pressure measurement.

6. An apparatus in accordance with any one of Claims 1 to 5, characterised by the features:
- a shut-off device and/or a throttling member (45) is/are arranged in the discharge line (19) after the first outlet opening (18) of the treatment chamber,
- the shut-off member and/or the throttling member (45) is/are preferably constructed so as to be able to be influenced by the signal transmitter (63) of the flow meter (55).

7. An apparatus in accordance with any one of Claims 1 to 6, characterised by the features:
- a shut-off member (48) and/or a throttling member is/are arranged in the discharge line (25) after the second outlet opening (24),
- the shut-off member (48) and/or the throttling member is/are preferably constructed so as to be able to be influenced by the signal transmitter (63) of the flow meter (55).

8. An apparatus in accordance with any one of Claims 1 to 7, characterised by the features:
- the discharge line (19) after the first outlet opening (18) has, preferably in the vicinity of the first outlet opening (18), an additional outlet (49) in its bottom wall-region, a collecting receptacle (51) for fluids from the treatment chamber (16) which are capable of dripping being arranged below this additional outlet (49),
- the collecting receptacle (51) is preferably removable.

9. An apparatus in accordance with Claim 8, characterised by the features:
- the collecting receptacle (51) has an outlet opening (53) which is connected to the discharge line (44) after the first outlet opening (18; 19) of the treatment chamber (16),
- the collecting receptacle (51) and/or its outlet opening is preferably in the form of an oil and fat separator.

10. An apparatus in accordance with any one of Claims 1 to 9, characterised by the features:
- in the treatment chamber (16) there is arranged a guide wall (26),
- - which divides the treatment chamber (16) into a main chamber (27) for the heat-treatment of the foodstuffs and into an ante-chamber (28) for the fan (31) and preferably also for the heating device (35),
- the guide wall (26) has two opening regions (33; 34) by means of which the main chamber (27) and the ante-chamber (28) are connected to one another,
- - one of the opening regions (33) preferably being located in the centre of the guide wall (26) and preferably being in the form of an inlet funnel or inlet nozzle and
- - the other opening region (34) being located, at least in places, in the region of the outer edge of the guide wall (26),
- the suction opening of the fan (31) is preferably arranged in alignment with the opening region (33) having the inlet nozzle.

11. An apparatus in accordance with Claim 10, characterised by the feature:
- the heating device (35) in the ante-chamber (28) is arranged in the region of the outlet openings of the fan (31).

## Revendications

1. Dispositif pour le traitement à chaud de produits alimentaires ayant les caractéristiques suivantes :
- un boîtier (11) avec une porte,
- dans le boîtier (11), il y a au moins deux chambres (chambre de traitement 16, chambre d'installation 17) séparées par une cloison (12) étanche au gaz,
- la chambre d'installation (17) comporte un générateur de vapeur (36),
- - relié à une conduite d'alimentation en eau (38),
- - susceptible d'être chauffé par une source de chaleur (37) commandée, et
- - dont l'orifice de sortie de vapeur (39) communique avec la chambre de traitement (16) par une conduite de liaison (41),
- la chambre de traitement (16) est munie d'un ventilateur (31),
- - pour mettre en circulation le fluide qui se trouve dans la chambre de traitement (16),
- un moyen de chauffage (35) est prévu dans la chambre de traitement (16)
- - qui permet de chauffer le fluide dans la chambre de traitement (16),
- au fond (15) de la chambre de traitement (16), se trouve un premier orifice de sortie (18),
- - auquel est raccordée une conduite de sortie (19) notamment pour un fluide susceptible de goutter, de la chambre de traitement (16),
- dans la zone supérieure de la chambre de traitement (16), se trouve une seconde ouverture de sortie (24),
- - à laquelle est raccordée une conduite d'évacuation (25), notamment pour le fluide non susceptible de goutter de la chambre de traitement (16),
caractérisé par les caractéristiques suivantes :
- dans la conduite de liaison (41), entre le générateur de vapeur (36) et la chambre de traitement (16), se trouve un capteur de mesure (56) d'un dispositif de mesure de débit (55) dont le générateur de signal (63) est relié à la commande de la source de chaleur (37) du générateur de vapeur (36).

2. Dispositif selon la revendication 1, caractérisé en ce que :
- le capteur de valeur de mesure du dispositif de mesure de débit (55) est un tube de Pitot (56).

3. Dispositif selon la revendication 1, caractérisé en ce que :
- le capteur de valeur de mesure du dispositif de mesure de débit (55) est un diaphragme ou une buse de mesure ou encore une buse de mesure Venturi.

4. Dispositif selon l'une des revendications 1 à 3,
caractérisé en ce que :
- le générateur de signal du dispositif de mesure de débit (55) est un manomètre à liquide (63) pour une mesure de différence de pressions et comporte des générateurs de signal pour le niveau du liquide dans les deux branches du manomètre à liquide.

5. Dispositif selon l'une des revendications 1 à 3,
caractérisé en ce que :
- le générateur de signal est une boîte manométrique (64) pour mesurer une différence de pressions.

6. Dispositif selon l'une des revendications 1 à 5,
caractérisé en ce que :
- dans la conduite de sortie (19), en aval du premier orifice de sortie (18) de la chambre de traitement, se trouve un organe d'obturation et/ou un organe d'étranglement (45),
- de préférence, l'organe d'obturation et/ou l'organe d'étranglement (45) peuvent être influencés par le générateur de signal (63) du dispositif de mesure de débit (55).

7. Dispositif selon l'une des revendications 1 à 6,
caractérisé en ce que :
- dans la conduite de sortie (25), en aval du second orifice de sortie (24), se trouve un organe d'obturation (48) et/ou un organe d'étranglement,
- de préférence, l'organe d'obturation (48) et/ou l'organe d'étranglement peuvent être influencés par le générateur de signal (63) du dispositif de mesure de débit (55).

8. Dispositif selon l'une des revendications 1 à 7,
caractérisé en ce que :
- la conduite de sortie (19) comporte, en aval du premier orifice de sortie (18), de préférence au voisinage de ce premier orifice de sortie (18), dans sa zone de paroi située en bas, une sortie auxiliaire (49) et en dessous de celle-ci un réceptacle (51) pour les fluides susceptibles de goutter provenant de la chambre de traitement (16),
- le réceptacle (51) est, de préférence, amovible.

9. Dispositif selon la revendication 8, caractérisé en ce que :
- le réceptacle (51) comporte un orifice de sortie (53) relié à la conduite d'évacuation (44) en aval du premier orifice de sortie (18 ; 19) de la chambre de traitement (16),
- de préférence, le réceptacle (51) et/ou son orifice de sortie sont réalisés comme séparateur d'huile et de graisse.

10. Dispositif selon l'une des revendications 1 à 9,
caractérisé en ce que :
- une paroi de guidage (26) est prévue dans la chambre de traitement (16),
- - pour subdiviser la chambre de traitement (16) en une chambre principale (27) pour le traitement par la chaleur des produits alimentaires et en une antichambre (28) pour le ventilateur (31) et, de préférence également pour le moyen de chauffage (35),
- la paroi de guidage (26) comporte deux zones d'ouverture (33 ; 34) par lesquelles la chambre principale (27) et l'antichambre (28) communiquent,
- - l'une des zones d'ouverture (33) se trouve, de préférence, au milieu de la paroi de guidage (26) et est réalisée, de préférence, sous la forme d'un entonnoir d'entrée ou d'une buse d'entrée,
- - l'autre zone d'ouverture (34) est située au moins par endroit dans la zone du bord extérieur de la paroi de guidage (26),
- de préférence, l'orifice d'aspiration du ventilateur (31) se trouve dans l'alignement de la zone d'ouverture (33) avec la buse d'entrée.

11. Dispositif selon la revendication 10, caractérisé en ce que :
- le moyen de chauffage (35) dans l'antichambre (28) est situé au niveau des orifices de sortie du ventilateur (31).
